# EUROPÄISCHE PATENTSCHRIFT

(11) **EP 2 095 004 B1**
(45) Veröffentlichungstag und Bekanntmachung des Hinweises auf die Patenterteilung: **26.10.2011**
(21) Anmeldenummer: 07857348.2
(22) Anmeldetag: 10.12.2007
(51) Int. Cl.: F16L 41/08

(54) **AGGREGAT-ANSCHLUSSVORRICHTUNG FÜR MEDIENLEITUNGEN**
ASSEMBLY CONNECTING APPARATUS FOR MEDIA LINES
DISPOSITIF DE RACCORDEMENT D'APPAREIL POUR CONDUITES DE FLUIDES

(30) Priorität: 21.12.2006 DE 202006019313 U
(43) Veröffentlichungstag der Anmeldung: 02.09.2009
(73) Patentinhaber: Voss Automotive GmbH, 51688 Wipperfürth (DE)
(72) Erfinder: BRANDT, Josef, 51688 Wipperfürth (DE); LECHNER, Martin, 51789 Lindlar (DE); HAGEN, Harald, 51688 Wipperfürth (DE); SIEPER, Günter, 42853 Remscheid (DE)
(74) Vertreter: Patentanwälte Dr. Solf & Zapf
(86) Internationale Anmeldenummer: PCT/EP2007/063628
(87) Internationale Veröffentlichungsnummer: WO 2008/077754

(56) Entgegenhaltungen:
- EP-A- 1 026 457
- DE-A1- 10 226 075
- DE-U1- 9 015 652

## Beschreibung

Die vorliegende Erfindung betrifft eine Anschlussvonichtung zum lösbaren Anschluss mindestens einer Medienleitung an ein Aggregat, wie zum Beispiel an einen Drucklufttank, bestehend aus einem Anschlussteil mit einem Verbindungsabschnitt zum aggregateseitigen Anschluss und mindestens einem Leitungsanschluss zum Anschluss einer Medienleitung.

Derartige Anschlussvorrichtungen dienen dazu, an einem beliebigen Aggregat, wie beispielsweise an einem Drucklufttank, eine oder mehrere Medienleitungen (Druckluftleitungen) anzuschließen. Hierzu bildet das Anschlussteil praktisch ein Obergangsstück. Bei bekannten Anschlussvorrichtungen der genannten Art besteht der Verbindungsabschnitt des Anschlussteils üblicherweise aus einem Gewindestutzen, wobei das jeweilige Aggregat als Anschlussöffnung ein entsprechendes Gewindeloch aufweisen muss. Folglich wird das Anschlussteil durch Einschrauben mit dem Aggregat verbunden, wobei die Gewindeverbindung zusätzlich durch geeignete Mittel abgedichtet werden muss.

Das Dokument DE 102 26 075 A1 beschreibt ein Anschlussstück für Kältemittelleitungen. Dieses bekannte Anschlussstück ist als so genannter "Fitting" ausschließlich zur Verbindung von Leitungen und daher allenfalls zu einem mittelbaren Aggregatanschluss "über Leitungen" und somit nicht zum direkten Anschluss an ein Aggregat offenbart. Dazu besteht das bekannte Anschlussstück aus einer Art Hohlkörper mit Durchtrittsbohrungen, deren Mündungsöffnungen auf einer Seite in einer Ebene liegen, während auf der anderen, gegenüberliegenden Seite in Fortsetzung der Durchtrittsbohrungen rohrartige Vorsprünge vorhanden sind. Hierbei sollen die. Öffnungen zur dichtenden Aufnahme von Kältemittelleitungen dienen, während auf die gegenüberliegenden rohrartigen Vorsprünge je eine Kältemittelleitung aufgesetzt wird. Das bekannte Anschlussstück ist im Wesentlichen einstückig aus einem Kunststoff hergestellt.

Der vorliegenden Erfindung liegt die Aufgabe zu Grunde, eine Anschlussvorrichtung der genannten Art bezüglich der aggregateseitigen Montageverbindung zu vereinfachen.

Erfindungsgemäß wird dies durch die Merkmale des unabhängigen Anspruchs 1 erreicht. Vorteilhafte Ausgestaltungen der Erfindung sind Gegenstand der abhängigen Ansprüche.

Demnach ist erfindungsgemäß das Anschlussteil mit mindestens einem den Verbindungsabschnitt bildenden, umfangsgemäß abgedichtet in eine aggregateseitige Stecköffnung einsteckbaren Steckzapfen, einer sich an den Steckzapfen anschließenden, sich quer zur Längsachse des Steckzapfens erstreckenden,

flanschartigen Grundplatte und mit dem mindestens einen Leitungsanschluss als einstückiges Formteil insbesondere aus Kunststoff oder Metall (z. B. Druckguss) ausgebildet. Hierbei weist die Grundplatte mindestens zwei exzentrisch zur Längsachse des Steckzapfens versetzte Schraubenlöcher sowie eine zumindest einseitige Versteifungsverrippung auf. Das jeweilige Aggregat braucht zur Aufnahme des bzw. jedes Steckzapfens lediglich eine einfache, zylindrische Lochöffnung (Bohrung) aufzuweisen. Die Montage des Anschlussteils erfolgt auf einfache und schnelle Weise durch bloßes Einstecken des Steckzapfens in die Stecköffnung des Aggregates. Zur Sicherung der Steckverbindung gegen Lösen brauchen dann nur noch zwei oder mehr Montageschrauben durch je eines der Schraubenlöcher der Grundplatte in ein aggregateseitiges Gewindeloch eingeschraubt zu werden. Die Befestigung kann auch mit selbst-gewindeformenden Schrauben erfolgen, die in einfache Bohrungen des Aggregates eingeschraubt werden. Durch die erfindungsgemäße Versteifungsverrippung der Grundplatte wird eine hohe Festigkeit des Anschlussteils erreicht, so dass die erfindungsgemäße Anschlussvorrichtung auch für höhere Mediendrücke geeignet ist. Durch die Ausbildung als einstückiges Kunststoff-Formteil ist das Anschlussteil auch kostengünstig herstellbar.

Anhand von bevorzugten, in der beiliegenden Zeichnung veranschaulichten Ausführungsbeispielen soll im Folgenden die Erfindung genauer erläutert werden. Dabei zeigen:
- Fig. 1: eine erste Ausführung eines erfindungsgemäßen Anschlussteils in einer Perspektivansicht auf seine Oberseite,
- Fig. 2: eine Perspektivansicht auf die Unterseite des Anschlussteils gemäß Fig. 1,
- Fig. 3: eine zweite Ausführung des Anschlussteils in einer Ansicht analog zu Fig. 1,
- Fig. 4: das Anschlussteil gemäß Fig. 3 in einer Ansicht analog zu Fig. 2,
- Fig. 5: eine Darstellung ähnlich Fig. 3 in einer modifizierten Ausführung,

Fig. 6 bis 9 weitere nich erfindungsgemäße Ausführungsvarianten des Anschlussteils in Perspektivansichten ähnlich Fig. 1,3 und 5.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

Eine erfindungsgemäße Anschlussvorrichtung wird durch ein Anschlussteil 2 gebildet, welches einen Verbindungsabschnitt 4 zum Anschluss an ein beliebiges, nicht dargestelltes Aggregat, wie insbesondere einen pneumatischen oder hydraulischen Druckmitteltank (beispielsweise Drucklufttank), sowie mindestens einen über einen inneren Kanal (in den Zeichnungen nicht erkennbar) mit dem Verbindungsabschnitt 4 verbundenen Leitungsanschluss 6 zum Anschluss einer - ebenfalls nicht dargestellten - Medienleitung (Schlauch- oder Rohrleitung für pneumatische oder hydraulische Druckmittel) aufweist.

Erfindungsgemäß ist der Verbindungsabschnitt 4 als mindestens ein schaftförmiger, im wesentlichen zylindrischer Steckzapfen 8 ausgebildet, der in eine aggregateseitige Stecköffnung (einfache zylindrische Bohrung) unter umfangsgemäßer Abdichtung einsteckbar ist. Das Anschlussteil 2 ist mit dem Steckzapfen 8, einer flanschartigen Grundplatte 10 und dem bzw. - im Falle von mehreren - jedem Leitungsanschluss 6 als einstückiges Formteil (Spritzgussteil) aus Kunststoff ausgebildet. Die Grundplatte 10 ist im Bereich zwischen dem Steckzapfen 8 und dem/den Leitungsanschluss/- anschlüssen 6 angeordnet, und zwar bevorzugt in einer zur Längsachse 12 (Steckachse) des Steckzapfens 8 senkrechten Ebene. Zur Fixierung des Anschlussteils 2 an dem jeweiligen Aggregat, d.h. zur Halterung gegen Lösen des Steckzapfens 8 aus der Aggregate-Stecköffnung, weist die Grundplatte 10 in ihren den Steckzapfen 8 seitlich überragenden Bereichen mindestens zwei exzentrisch zur Längsachse 12 und insbesondere symmetrisch dazu versetzte Schraubenlöcher 14 auf, durch die hindurch jeweils eine nicht dargestellte Montageschraube in eines von mindestens zwei korrespondierenden (Gewinde-) Löchern des jeweiligen Aggregates eingeschraubt werden kann. Ferner weist die Grundplatte 10 erfindungsgemäß eine zumindest einseitige Versteifungsverrippung 16 auf.

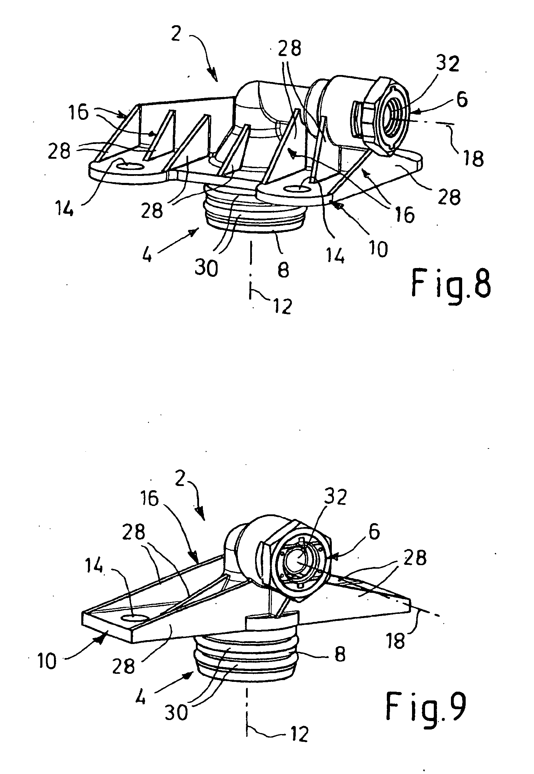

In den Ausführungen gemäß Fig. 8 und 9 weist das Anschlussteil 2 jeweils nur einen Leitungsanschluss 6 zum Anschluss einer einzelnen Medienleitung auf.

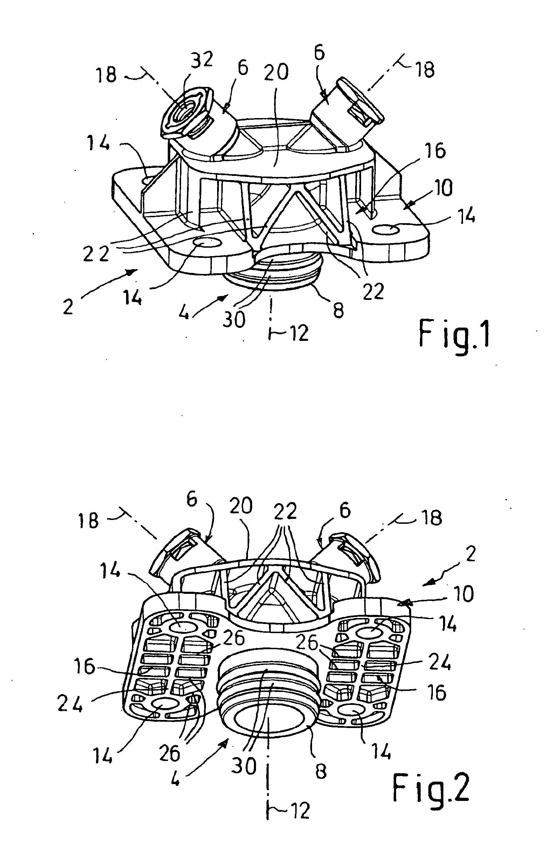

In den übrigen Ausführungen gemäß Fig. 1 bis 7 ist das Anschlussteil 2 jeweils als Verteiler mit mindestens zwei Leitungsanschlüssen 6 ausgebildet, die miteinander und mit dem Verbindungsabschnitt 4 über innere Kanäle korrespondierend verbunden sind. Die Leitungsanschlüsse 6 können im Grunde beliebig ausgerichtet sein, und zwar bezüglich ihrer Anschlussachsen 18 quer oder mit zum Steckzapfen 8 entgegengesetzter Richtung parallel oder schräg zur Längsachse 12 des Steckzapfens 8. Hierzu sind in den Zeichnungsfiguren verschiedene Möglichkeiten veranschaulicht, die auch ohne weitere Ausführungen verständlich sein dürften.

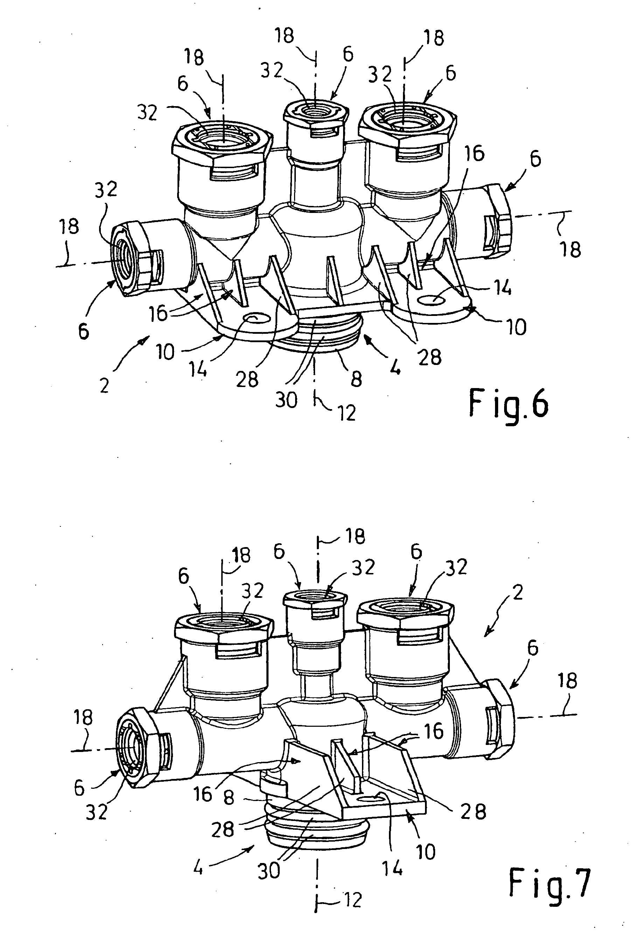

Bei den Ausführungen gemäß Fig. 7 und 9 weist die relativ schmal, praktisch streifenförmig ausgebildete Grundplatte 10 nur zwei symmetrisch zur Längsachse 12 einander gegenüberliegende Schraubenlöcher 14 auf. Bei den übrigen Ausführungen weist die im wesentlichen rechteckige Grundplatte 10 zumindest in ihren vorzugsweise abgerundeten Eckbereichen vier Schraubenlöcher 14 auf. Diese Schraubenlöcher 14 sind einander paarweise gegenüberliegend ebenfalls symmetrisch um die Längsachse 12 verteilt angeordnet.

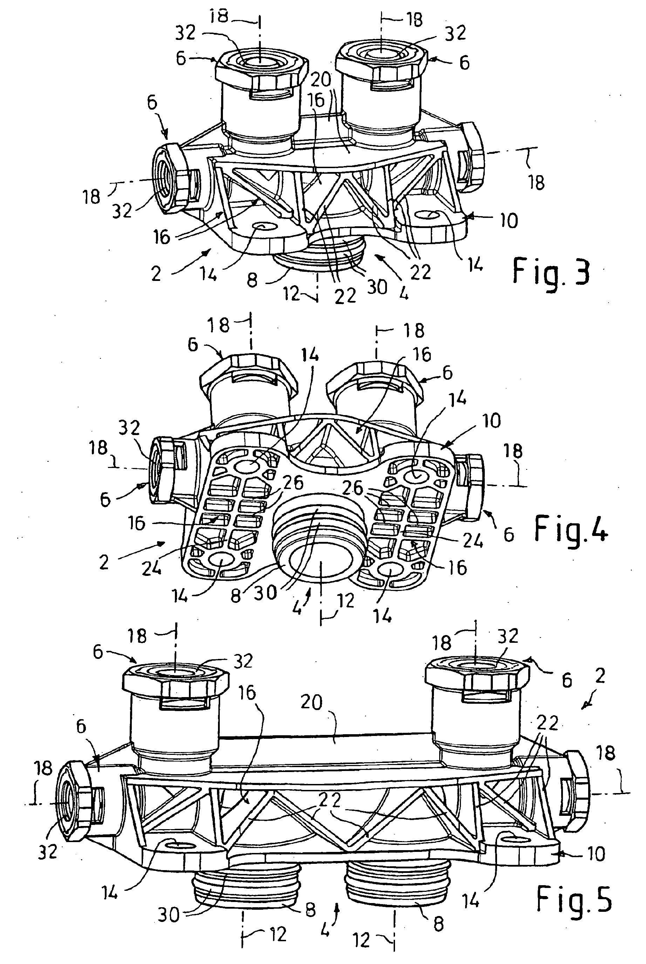

In Fig. 5 ist beispielhaft eine Ausführung dargestellt, bei der der Verbindungsabschnitt 4 aus zwei parallel nebeneinander angeordneten Steckzapfen 8 besteht, die in zwei korrespondierende Stecköffnungen des Aggregates einzustecken sind. Durch die dadurch entstehende größere Länge (bzw. Breite) der Grundplatte 10 können - abweichend von der Darstellung - auch mehr als vier (z. B. sechs) Schraubenlöcher 14 vorgesehen sein.

Die verschiedenen Ausführungsformen unterscheiden sich auch hinsichtlich der Art der Versteifungsverrippung 16.

Bei den bevorzugten Ausführungen gemäß Fig. 1 bis 5 ist die Versteifungsverrippung 16 auf der dem Steckzapfen 8 gegenüberliegenden Oberseite der Grundplatte 10 nach Art eines Tragfachwerkes ausgebildet. Dazu ist eine zur Grundplatte 10 parallele Stützplatte 20 vorgesehen, und die Grundplatte 10 und die Stützplatte 20 sind über Fachwerkstreben 22 miteinander verbunden. Für den Verlauf der Fachwerkstreben 22 gibt es im Grunde beliebige Möglichkeiten, wozu auf die einzelnen Zeichnungsfiguren verwiesen wird. Bei diesen Ausführungen weist die Grundplatte 10 auch auf ihrer den oder die Steckzapfen 8 aufweisenden Unterseite eine Versteifungsverrippung 16 auf, die gitterartig aus Längsrippen 24 und Querrippen 26 besteht. Wie sich aus den Fig. 2 und 4 ergibt, verlaufen die Längsrippen 24 jeweils entsprechend einer durch zwei benachbarte Schraubenlöcher 14 verlaufenden Loch-Achse, während die Querrippen 26 jeweils quer, insbesondere rechtwinklig zu der Loch-Achse und zu der jeweiligen Längsrippe 24 ausgerichtet sind. Die Grundplatte 10 ist relativ dick ausgebildet, wobei die Rippen 24,26 durch Vertiefungen (Material-Aussparungen) auf der Unterseite der Grundplatte 10 gebildet sind.

Bei den übrigen Ausführungsformen gemäß Fig. 6 bis 9 besteht die auf der Oberseite der Grundplatte 10 vorgesehene Versteifungsverrippung 16 aus einzelnen, bevorzugt zueinander parallelen Rippen 28, die sich jeweils ausgehend vom Bereich der Leitungsanschlüsse 6 mit einer schräg abnehmenden Höhe bis zum Rand der Grundplatte 10 erstrecken. Verschiedene Möglichkeiten ergeben sich aus denen einzelnen Fig. 6 bis 9.

Der bzw. jeder Steckzapfen 8 trägt zur umfangsgemäßen Abdichtung innerhalb der Stecköffnung des Aggregates auf seinem Außenumfang mindestens einen in einer äußeren Ringnut angeordneten Dichtring 30. Vorzugsweise sind zwei axial beabstandete Dichtringe 30 in je einer Ringnut angeordnet. Es kann aber auch (mindestens) ein ringförmig aufgeformter, z. B. in 2K-Technik angespritzter Dichtabschnitt vorgesehen sein.

In allen dargestellten Ausführungen weist jeder Leitungsanschluss 6 eine Aufnahmeöffnung 32 zum Einstecken der jeweiligen Leitung sowie im Bereich der Aufnahmeöffnung 32 nicht dargestellte Dicht- und Haltemittel zur Arretierung und umfangsgemäßen Abdichtung der eingesteckten Leitung auf. Als Haltemittel kann jeweils ein Klemm- oder Schneidring und als Dichtmittel ein innerer Dichtring vorgesehen sein. Alternativ zu den dargestellten Ausführungen sind als Leitungsanschlüsse 6 auch Stutzen zum Aufstecken der Leitung möglich. Zudem können auch zusätzliche, z. B. adapterartige Anschlussteile, wie sogenannte Einpresspatronen, vorgesehen sein.

## Patentansprüche

1. Anschlussvorrichtung zum lösbaren Anschluss mindestens einer Medienleitung an ein Aggregat, wie beispielsweise einen Druckmitteltank, bestehend aus einem einstückigen Anschlussteil (2) mit einem Verbindungsabschnitt (4) zum aggregateseitigen Anschluss und mindestens einem Leitungsanschluss (6) zum Anschluss einer Medienleitung,
wobei das Anschlussteil (2) mit mindestens einem den Verbindungsabschnitt (4) bildenden, umfangsgemäß abgedichtet in eine aggregateseitige Stecköffnung einsteckbaren Steckzapfen (8), einer sich an den Steckzapfen (8) anschließenden, sich quer zur Längsachse (12) des Steckzapfens (8) erstreckenden, flanschartigen Grundplatte (10) und mit dem mindestens einen Leitungsanschluss (6) als einstückiges Formteil ausgebildet ist, wobei die Grundplatte (10) mindestens zwei exzentrisch zur Längsachse (12) des Steckzapfens (8) versetzte Schraubenlöcher (14) unfweist daduch gekennzeichnet daß eine zumindest einseitige, nach Art eines Tragfachwerkes ausgebildete Versteifungsverrippung (16) vorhanden ist.

2. Anschlussvorrichtung nach Anspruch 1,
**dadurch gekennzeichnet, dass** das Anschlussteil (2) als Verteiler mit mindestens zwei Leitungsanschlüssen (6) ausgebildet ist, die bezüglich ihrer Anschlussachsen (18) quer oder mit zum Steckzapfen (8) entgegengesetzter Richtung parallel oder schräg zur Längsachse (12) des Steckzapfens (8) ausgerichtet sind.

3. Anschlussvorrichtung nach Anspruch 1 oder 2,
**dadurch gekennzeichnet, dass** die Grundplatte (10) zwei bis mindestens vier symmetrisch um die Längsachse (12) des Steckzapfens (8) verteilt angeordnete Schraubenlöcher (14) aufweist.

4. Anschlussvorrichtung nach einem der Ansprüche 1 bis 3,
**dadurch gekennzeichnet, dass** die Versteifungsverrippung (16) auf der dem Steckzapfen (8) gegenüberliegenden Oberseite der Grundplatte (10) ausgebildet ist.

5. Anschlussvorrichtung nach einem der Ansprüche 1 bis 4,
**dadurch gekennzeichnet, dass** die Versteifungsverrippung (16) auf der den oder die Steckzapfen (8) aufweisenden Unterseite der Grundplatte (10) gitterartig aus Längsrippen (24) und Querrippen (26) besteht, wobei vorzugsweise die Längsrippen (24) jeweils entsprechend einer durch zwei benachbarte Schraubenlöcher (14) verlaufenden Loch-Achse und die Querrippen (26) jeweils quer, insbesondere rechtwinklig zu der Loch-Achse ausgerichtet sind.

6. Anschlussvorrichtung nach einem der Ansprüche 1 bis 5,
**dadurch gekennzeichnet, dass** der/jeder Steckzapfen (8) zur umfangsgemäßen Abdichtung innerhalb der Stecköffnung mindestens einen Dichtabschnitt - insbesondere mindestens einen in einer äußeren Ringnut angeordneten oder stoffschlüssig angeformten Dichtring (30) - aufweist.

7. Anschlussvorrichtung nach einem der Ansprüche 1 bis 6,
**dadurch gekennzeichnet, dass** der/jeder Leitungsanschluss (6) eine Aufnahmeöffnung (32) zum Einstecken der jeweiligen Leitung sowie im Bereich der Aufnahmeöffnung (32) Dicht- und Haltemittel zur Arretierung und umfangsgemäßen Abdichtung der eingesteckten Leitung aufweist.

## Claims

1. A connection device for the detachable connection of at least one media line to a unit, such as for example a pressure-medium tank, consisting of a one-piece connection part (2) with a connection section (4) for connection on the unit side and at least one line connection (6) for connection of a media line, wherein the connection part (2) is formed as a one-piece shaped part with at least one plug-in spigot (8) forming the connection section (4) which can be inserted, peripherally sealed, into an insertion opening on the unit side, a flange-like base plate (10) adjoining the plug-in spigot (8) and extending transversely to the longitudinal axis (12) of the plug-in spigot (8) and with the at least one line connection (6), the base plate (10) having at least two screw holes (14) offset eccentrically to the longitudinal axis (12) of the plug-in spigot (8), **characterised in that** on at least one side a reinforcement rib system (16) formed in the manner of a supporting framework is present.

2. A connection device according to Claim 1, **characterised in that** the connection part (2) is formed as a distributor with at least two line connections (6), which are oriented with respect to their connection axes (18) transversely or with a direction opposed to the plug-in spigot (8) parallel or obliquely to the longitudinal axis (12) of the plug-in spigot (8).

3. A connection device according to Claim 1 or 2, **characterised in that** the base plate (10) has two to at least four screw holes (14) arranged distributed symmetrically about the longitudinal axis (12) of the plug-in spigot (8).

4. A connection device according to one of Claims 1 to 3, **characterised in that** the reinforcement rib system (16) is formed on the upper side of the base plate (10) which lies opposite the plug-in spigot (8).

5. A connection device according to one of Claims 1 to 4, **characterised in that** the reinforcement rib system (16) on the underside of the base plate (10) having the plug-in spigot or spigots (8) consists in grid-like manner of longitudinal ribs (24) and transverse ribs (26), with preferably the longitudinal ribs (24) in each case being oriented corresponding to a hole axis extending through two adjacent screw holes (14) and the transverse ribs (26) in each case being oriented transversely, in particular at right-angles, to the hole axis.

6. A connection device according to one of Claims 1 to 5, **characterised in that** the/each plug-in spigot (8) for peripheral sealing within the insertion opening has at least one sealing section, in particular at least one sealing ring (30) which is arranged in an outer annular groove or is formed on in form-locked manner.

7. A connection device according to one of Claims 1 to 6, **characterised in that** the/each line connection (6) has a receiving opening (32) for inserting the respective line and in the region of the receiving opening (32) has sealing and holding means for locking and peripheral sealing of the inserted line.

## Revendications

1. Dispositif de raccordement pour le raccordement amovible d'au moins une conduite de fluides à un groupe, tel qu'un réservoir de liquide de pression, par exemple, composé d'une pièce de raccordement d'un seul tenant (2) munie d'une partie de liaison (4) pour le raccordement côté groupe et d'au moins un raccord de conduite (6) pour le raccordement d'une conduite de fluides, dans lequel la pièce de raccordement (2) est constituée, sous forme de pièce moulée d'un seul tenant, d'au moins un raccord fileté (8) enfichable dans un orifice d'enfichage côté groupe, de manière étanche dans le sens circonférentiel, formant la partie de liaison (4), d'une plaque de fond (10) à mode de bride, se raccordant au raccord fileté (8), s'étendant perpendiculairement à l'axe longitudinal (12) du raccord fileté (8) et d'un ou de plusieurs raccords de conduite (6), dans lequel la plaque de fond (10) comporte au moins deux trous à vis (14) décalés de manière excentrique par rapport à l'axe longitudinal (12) du raccord fileté (8), **caractérisé en ce qu'**on a prévu un nervurage de renforcement (16), réalisé à mode de charpente, au moins d'un côté.

2. Dispositif de raccordement selon la revendication 1, **caractérisé en ce que** la pièce de raccordement (2) est réalisée sous la forme d'un distributeur muni d'au moins deux raccords de conduite (6) qui sont orientés, vis-à-vis de leurs axes de raccordement (18), de manière perpendiculaire ou, dans un sens opposé au raccord fileté (8), de manière parallèle ou inclinée par rapport à l'axe longitudinal (12) du raccord fileté (8).

3. Dispositif de raccordement selon la revendication 1 ou 2, **caractérisé en ce que** la plaque de fond (10) comporte de deux à au moins quatre trous à vis (14) répartis de manière symétrique autour de l'axe longitudinal (12) du raccord fileté (8).

4. Dispositif de raccordement selon l'une quelconque des revendications 1 à 3, **caractérisé en ce que** le nervurage de renforcement (16) est réalisé sur le côté supérieur de la plaque de fond (10) opposé au raccord fileté (8).

5. Dispositif de raccordement selon l'une quelconque des revendications 1 à 4, **caractérisé en ce que** le nervurage de renforcement (16) est composé, sur le côté inférieur de la plaque de fond (10) présentant le ou les raccords filetés (8), de nervures longitudinales (24) et de nervures transversales (26), à mode de treillis, dans lequel, de préférence, les nervures longitudinales (24) sont orientées selon un axe de trou s'étendant à travers deux trous à vis adjacents (14) et les nervures transversales (26) perpendiculairement, en particulier en angle par rapport à l'axe du trou.

6. Dispositif de raccordement selon l'une quelconque des revendications 1 à 5, **caractérisé en ce que** le/chaque raccord fileté (8) comporte, pour l'étanchéisation circonférentielle à l'intérieur de l'orifice d'enfichage, au moins une partie d'étanchéité, en particulier au moins un anneau d'étanchéité (30) placé dans une rainure annulaire externe ou formé par liaison de matière.

7. Dispositif de raccordement selon l'une quelconque des revendications 1 à 6, **caractérisé en ce que** le/chaque raccord de conduite (6) comporte un orifice de logement (32) pour l'enfichage de la conduite respective ainsi que, au niveau de l'orifice de logement (32), de moyens d'étanchéité et de retenue pour le blocage et l'étanchéisation circonférentielle de la conduite enfichée.
